# EUROPÄISCHE PATENTANMELDUNG

(11) **EP 4 850 828 A1**
(43) Veröffentlichungstag der Anmeldung: **09.12.2026**
(21) Anmeldenummer: 25181446.3
(22) Anmeldetag: 06.06.2025
(51) Int. Cl.: B21D 7/06, B21C 37/08, B21C 37/15, B23K 9/00, B23K 26/346, B23K 26/36, B23K 28/02, B21D 9/08, B21D 11/08

(54) **HOHLPROFIL UND EIN VERFAHREN ZUR HERSTELLUNG DIESES HOHLPROFILS MIT ZUMINDEST EINEM GEBOGENEN LÄNGSABSCHNITT**

(71) Anmelder: voestalpine Krems GmbH, 3500 Krems an der Donau (AT)
(72) Erfinder: Mayer, Florian, 3500 Krems an der Donau (AT); Sprinzl, Roman, 2013 Göllersdorf (AT); Manuel, Schuscha, 3425 Langenlebarn (AT)
(74) Vertreter: Jell, Friedrich

(57) **Zusammenfassung**

Es wird ein Hohlprofil (1) und ein Verfahren zur Herstellung dieses Hohlprofils (1) mit zumindest einem gebogenen Längsabschnitt (2c) gezeigt. Um einfach handhabbar reproduzierbar hoher Form- und Maßhaltigkeit zu erreichen, wird vorgeschlagen, dass ein Hohlprofil (1), insbesondere aus Metall, bereitgestellt wird, das einen Längsabschnitt (2b) mit einer geschlossenen Profilform sowie einen eine offene Profilform aufweisenden Längsabschnitt (2a) mit zumindest einem durchgehend verlaufenden Längsschlitz (3a, 3b) aufweist, das Hohlprofil (1) im Längsabschnitt (2a) mit der offenen Profilform gebogen wird, und nach dem Biegen der zumindest eine Längsschlitz (3a, 3b) im gebogenen Längsabschnitt (2c) des Hohlprofils (1) zumindest abschnittsweise stoffschlüssig gefügt wird, insbesondere mit einer Längsschweißnaht (4a, 4b) verschweißt wird.

## Beschreibung

Die Erfindung betrifft Hohlprofil und ein Verfahren zur Herstellung dieses Hohlprofils mit zumindest einem gebogenen Längsabschnitt.

Zur Herstellung eines geschlossenen Hohlprofils mit zumindest einem gebogenen Längsabschnitt ist aus dem Stand der Technik ein Biegeverfahren bekannt, bei dem ein rundes Stahlrohr längs halbiert wird, wodurch zwei halbzylindrische Stahlrohre entstehen. Diese werden jeweils in einem definierten Winkel gebogen - entweder in Richtung der Schnittkante oder entgegen dieser. Anschließend werden die beiden gebogenen Hälften durch Stumpfschweißen wieder zusammengefügt, sodass die ursprüngliche runde Form erhalten bleibt. Zur Erhöhung der Stabilität werden innen Verstärkungsplatten eingesetzt und verschweißt.

Ein derartiges Biegeverfahren ist vergleichsweise aufwendig, da das Rohr zunächst längs geschnitten, dann gebogen und schließlich wieder verschweißt werden muss. Die Maßhaltigkeit ist problematisch, da beim Biegen und Schweißen Verzüge und Ungenauigkeiten auftreten können. Zudem können Spannungen im Material entstehen, die die mechanischen Eigenschaften des Rohrs beeinträchtigen und eine aufwendige Nachbearbeitung erfordern, um die gewünschte Form und Maßhaltigkeit sicherzustellen.

Die Erfindung hat sich daher ausgehend vom Eingangs geschilderten Verfahren die Aufgabe gestellt, ein Verfahren zu schaffen, das bei reproduzierbarer hoher Form- und Maßhaltigkeit einfach handhabbar ist.

Die Erfindung löst die gestellte Aufgabe durch die Merkmale des Anspruchs 1.

Indem ein Hohlprofil, insbesondere aus Metall, bereitgestellt wird, das einen Längsabschnitt mit einer geschlossenen Profilform sowie einen eine offene Profilform aufweisenden Längsabschnitt mit zumindest einem durchgehend verlaufenden Längsschlitz aufweist, kann die Vorbereitung für das Verfahren erleichtert werden.

Dieses Hohlprofil kann nämlich dann einem prozesssicheren Biegeverfahren unterworfen werden, indem dieses Hohlprofil im Längsabschnitt mit der offenen Profilform gebogen wird. Dies beispielsweise, wenn das Hohlprofil ausschließlich in diesem im Längsabschnitt gebogen wird. Mit diesem Längsschlitz reduzieren sich nämlich die Schubkräfte beim Biegen erheblich, wodurch unerwünschte plastische Verformungen, wie beispielsweise Faltenbildung, minimiert werden können. Zudem sorgt dies für eine kontrollierte Wandstärkenverteilung, wodurch Risse und/oder Materialschwächungen vermieden und so eine Maßhaltigkeit verbessert werden kann.

Die von einem geschlossenen Hohlprofil gewünschte mechanische Integrität, wie beispielsweise Steifigkeit etc., kann jedoch auch von dem erfindungsgemäßen Hohlprofil gewährleistet werden, indem nach dem Biegen der zumindest eine Längsschlitz im gebogenen Längsabschnitt des Hohlprofils zumindest abschnittsweise stoffschlüssig gefügt wird. Dieses stoffschlüssige Fügen kann beispielsweise ein Schweißen sein, indem der zumindest eine Längsschlitz mit einer Längsschweißnaht verschweißt wird.

Damit ist ein Verfahren geschaffen, das bei reproduzierbarer hoher Form- und Maßhaltigkeit dennoch einfach handhabbar ist.

Vorzugsweise wird das bereitgestellte Hohlprofil ausgehend von einem geschlossenen Hohlprofil unter Einbringung des zumindest einen Längsschlitzes hergestellt, um das Verfahren weiter zu vereinfachen. Der zumindest einen Längsschlitz kann beispielsweise durch ein, beispielsweise abtragendes, Trennverfahren in das Hohlprofil eingebracht werden. Vorstellbar ist, dass der zumindest eine Längsschlitz an einem Ende des Hohlprofils beginnend eingebracht wird, was das Verfahren weiter erleichtern kann.

Mit weiter verminderten Spannungen beim Biegen kann gerechnet werden, wenn vorzugsweise das bereitgestellte Hohlprofil wenigstens zwei Längsschlitze des zumindest einen Längsschlitzes aufweist. Dies kann das Biegen bei hoher Form- und Maßhaltigkeit weiter erleichtern sowie präzise Ergebnisse liefern, auch bei komplexen, beispielsweise engeren, Geometrien ermöglichen.

Vorstehendes kann weiter verbessert werden, wenn sich zumindest zwei der Längsschlitze im Querschnitt des Hohlprofils (1) gesehen diametral gegenüberliegen.

Vorzugsweise handelt es sich bei dem zumindest einen Längsschlitz um einen zumindest abschnittsweise offenen Längsschlitz, der sich durch einen Spalt zwischen seinen sich jeweils gegenüberliegenden Schlitzlängskanten ergibt. Mit einem erleichterten Biegen und verbesserter Maßhaltigkeit kann gerechnet werden, wodurch das Verfahren noch effizienter und reproduzierbarer werden kann.

Weist der zumindest eine Längsschlitz zumindest einen Distanzhalter auf, der einer seiner Schlitzlängskanten vorspringt und beim Biegen als Anschlag wirkend einen Abstand zwischen seinen sich gegenüberliegenden Schlitzlängskanten festlegt, kann dies der Formgenauigkeit des gebogenen Abschnitts weiter förderlich sein.

Vorzugsweise ist der zumindest eine Längsschlitz einseitig an einem Ende des Hohlprofils offen, um die Formgenauigkeit des gebogenen Profils weiter zu verbessern. Am Ende des Hohlprofils kann nämlich das Profil besser für das Biegen gehalten und/oder eingespannt werden, wodurch eine präzisere und stabilere Konturgebung ermöglicht werden kann.

Vorstellbar ist zudem, dass der Längsabschnitt mit der geschlossenen Profilform an den anderen Längsabschnitt mit der offenen Profilform direkt anschließt, was das Biegen erleichtern kann.

Die Formgenauigkeit kann weiter erhöht werden, wenn beim Biegen, insbesondere Zugumformungsbiegen, das Hohlprofil an zumindest einer, insbesondere außenliegenden, Matrize und/oder an einem, insbesondere innenliegenden, Dorn anliegt.

Das Hohlprofil kann bereits auf seine Endbearbeitung vorbereitet werden, wenn vor dem stoffschlüssigen Fügen des zumindest einen Längsschlitzes, insbesondere vor dem Biegen des Hohlprofils, zumindest ein Profillängsabschnitt der durch diesen Längsschlitz getrennten Profillängsabschnitte des Hohlprofils in dessen Länge gegenüber zumindest einem anderen Profillängsabschnitt abgelängt wird. Dies reduziert dehnungsbedingte Überstände der Profillängsabschnitte und kann nach dem Biegen beispielsweise zu einem planen Stirnende führen.

Ein stoffschlüssiges Fügen kann beispielsweise erleichtert werden, wenn die Schlitzlängskanten der jeweiligen Längsschlitze parallel gegenüberliegen oder v-förmig zueinander geneigt gegenüberliegen.

Dies wird weiter verbessert, wenn die sich im Querschnitt parallel gegenüberliegenden Schlitzlängskanten zur Radialrichtung geneigten verlaufend sind.

Vorzugsweise wird der zumindest eine Längsschlitz durchgehend stoffschlüssig gefügt, was die mechanische Belastbarkeit des Hohlprofils weiter verbessern kann. Beispielsweise wird der zumindest eine Längsschlitz mit einer Längsschweißnaht durchgehend verschweißt.

Die Belastbarkeit der stoffschlüssigen Verbindung kann weiter erhöht werden, wenn der zumindest eine Längsschlitz in Längsrichtung zumindest abschnittsweise einen geraden und/oder gekrümmten, insbesondere sägezahnförmigen und/oder wellenförmigen, Verlauf aufweist.

Die Erfindung hat sich zudem die Aufgabe gestellt, ein standfestes Hohlprofil mit hoher Maßgenauigkeit auch bei engen Biegeradien zur Verfügung zu stellen.

Die Erfindung löst die gestellte Aufgabe durch die Merkmale des Anspruchs 14.

Indem das Hohlprofil unter Vermeidung einer umfänglich geschlossenen Fügeverbindung, insbesondere Querschweißnaht, im gebogenen Längsabschnitt zumindest einen stoffschlüssig gefügten, insbesondere verschweißten, Längsschlitz aufweist, kann selbst bei engen Biegeradien das Hohlprofil eine hohe Maßgenauigkeit aufweisen. Das Hohlprofil kann beispielsweise ein geschlossenes Hohlprofil sein. Beispielsweise handelt es hierbei um ein geschlossenes Hohlprofil bzw. einem Hohlprofil mit einer geschlossenen Profilform.

Dieses Hohlprofil kann sich insbesondere für ein Bauteil eignen oder selbst ein Bauteil sein.

In den Figuren ist beispielsweise der Erfindungsgegenstand anhand eines Ausführungsbeispiels näher dargestellt. Es zeigen
- Fig. 1: eine Seitenansicht auf ein abschnittsweise geschlitztes Hohlprofil und
- Fig. 2a bis 2c: Schritte im Verfahren zur Herstellung eines geschlossenen Hohlprofils aus dem nach Fig. 1 dargestellten Hohlprofil und
- Fig. 3: eine Querschnittsansicht in einem gebogenen Längsabschnitt des Hohlprofils nach Fig. 2c.

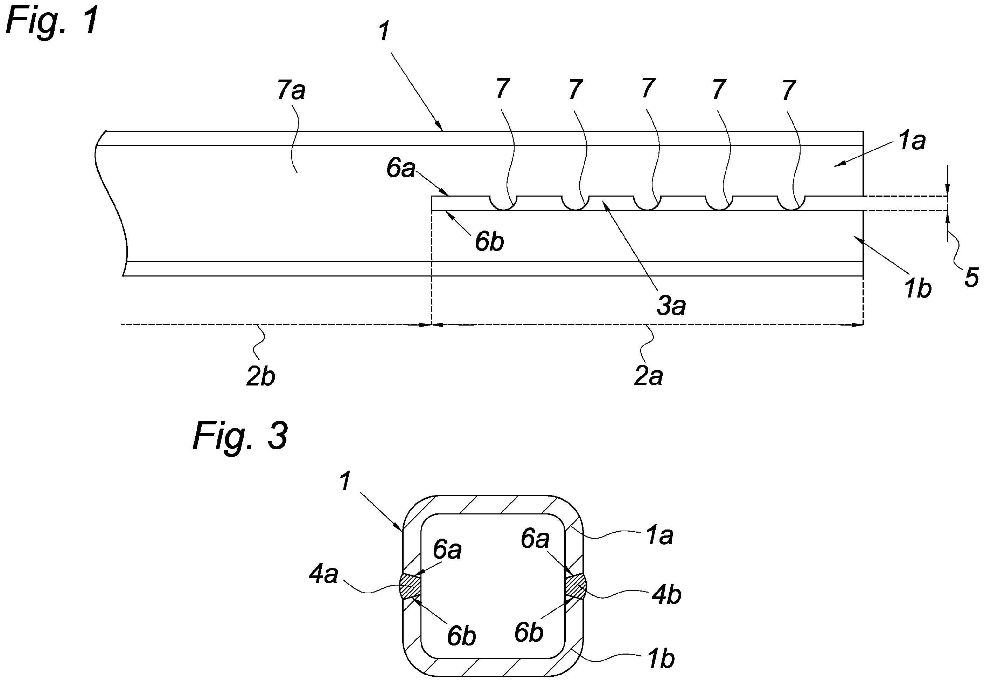

Das nach beispielsweise nach Fig. 1 dargestellte und als Rohr ausgebildete Hohlprofil 1 aus Metall weist insgesamt einen geraden Verlauf auf, der -wie dargestellt- sich aus zwei geraden Längsabschnitten 2a, 2b teilt. Das Hohlprofil 1 ist nach dem Ausführungsbeispiel ein Rechteckrohr bzw. ein rechteckiges Hohlprofil, wobei aber andere Geometrien und/oder Profilformen denkbar sind. Beispielsweise ist ein kreisrundes oder dreieckiges Hohlprofil oder auch einen quer zur Längsachse achtförmigen Hohlquerschnitt aufweisendes Hohlprofil denkbar, was nicht dargestellt worden ist.

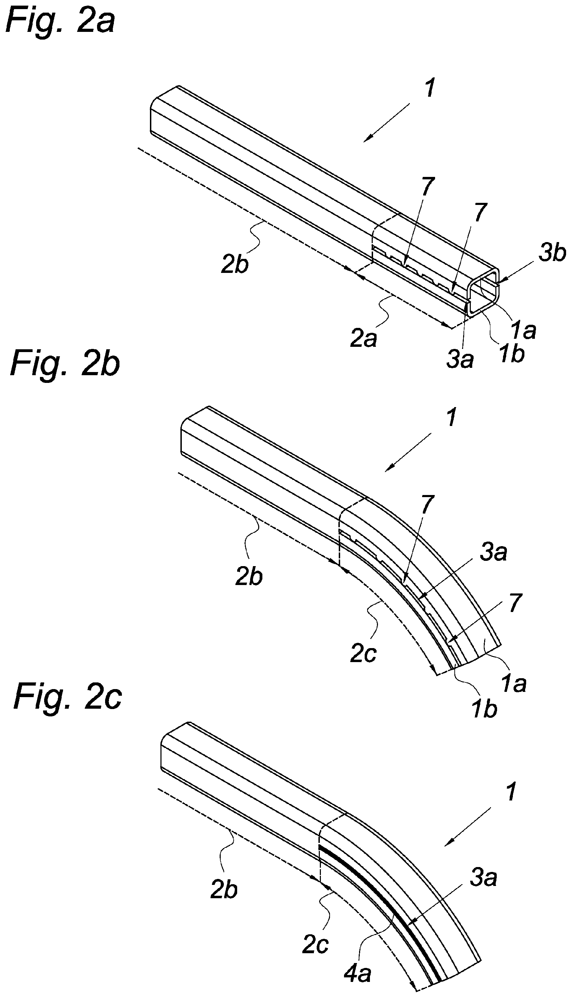

Wie in Fig. 1 und 2a zu erkennen, sind im geraden Längsabschnitt 2a des Hohlprofils 1 zum Unterschied zum direkt anschließenden anderen Längsabschnitt 2b zwei durchgehende Längsschlitze 3a, 3b vorgesehen. Der jeweilige Längsschlitz 3a, 3b durchdringt die Wand des Hohlprofils 1.

Das nach Fig. 1 und 2a dargestellte Hohlprofil 1 kann einfach hergestellt werden, indem von einem geschlossenen Hohlprofil 1 ausgehend die Längsschlitze 3a, 3b in dieses Hohlprofil 1 eingebracht werden, beispielsweise mit einem Laserschneiden.

Der Längsabschnitt 2a mit den Längsschlitzen 3a, 3b weist damit eine offene Profilform auf - der andere Längsabschnitt 2b weist eine geschlossene Profilform auf. Das Hohlprofil 1 kann beispielsweise zudem weitere -nicht näher dargestellte- Längsabschnitte aufweisen.

Die zwei durchgehenden Längsschlitze 3a, 3b verlaufen am Hohlprofil 1 gegenüberliegend, parallel zueinander und gerade in Längsrichtung L des Hohlprofils 1. Andere Verläufe, wie gekrümmte, insbesondere sägezahnförmige oder wellenförmige, sind vorstellbar, aber nicht dargestellt.

Damit ist das Hohlprofil 1 besonders für ein Biegen mit reduzierten Schubkräften vorbereitet. Das Hohlprofil 1 wird nämlich ausschließlich in dem Längsabschnitt 2a mit den Längsschlitzen 3a, 3b gebogen. Das in diesem Bereich in zwei Halbschalen als Profillängsabschnitt 1a, 1b geteilte Hohlprofil 1 erfährt sohin beim Biegen geringere Materialbeanspruchung, was Rissbildung und ungleichmäßige Wandstärken verringert. Zugleich bleiben Maßhaltigkeit und Oberflächenqualität erhalten, während die Rückfederung sinkt. Insgesamt entsteht damit ein präzise gebogenes Hohlprofil 1, wie in Fig. 2b dargestellt.

Diese Längsschlitze 3a, 3b wirken sich jedoch auf die mechanischen Kennwerte des Hohlprofils 1 nicht nachteilig aus, weil diese -wie in Fig. 2c und 3 dargestellt- mit je einer Längsschweißnaht 4a, 4b stoffschlüssig verbunden sind.

Damit kann durch das erfindungsgemäße Verfahren ein geschlossenes Hohlprofil 1 geschaffen werden, das frei von einer umfänglich geschlossenen Fügeverbindung, beispielsweise Querschweißnaht, wie dies beispielsweise beim Stand der Technik der Fall ist, einen präzise gebogenen Längsabschnitt 2c aufweist. Lediglich verschweißte Längsschlitze 3a, 3b als Fügeverbindung sind am erfindungsgemäßen Hohlprofil 1 zu erkennen, welche aber handhabungsfreundlich und präzise am Hohlprofil 1 herstellbar sind - beispielsweise durch ein Laserschweißen. Ein solches Hohlprofil 1 ist für tragende Bauteile, beispielsweise bei Leichtbauanwendungen, besonders geeignet.

Wie zudem der Fig. 1 zu entnehmen, handelt es sich bei den Längsschlitzen 3a, 3b um offene Längsschlitze 3a, 3b. Solch offene Längsschlitze 3a, 3b zeichnen sich durch einen Spalt 5 zwischen den sich jeweils gegenüberliegenden Schlitzlängskanten 6a, 6b aus und erleichtern das Biegen weiter. Dies ohne verringerte Maßhaltigkeit und Oberflächenqualität, da die Längsschlitz 3a, 3b mehrere voneinander beabstandete Distanzhalter 7 aufweisen, wie in Fig. 1, 2a und 2b zu erkennen. Die Distanzhalter springen der einen Schlitzlängskante 6a vor und bilden damit beim Biegen einen Anschlag für die andere Schlitzlängskante 6b. Damit wird der Abstand zwischen den sich gegenüberliegenden Schlitzlängskanten 6a, 6b festgelegt, was die Präzision beim Biegen weiter verbessert.

Zudem schließt auch der Längsabschnitt 2a mit den Längsschlitzen 3a, 3b an das stirnseitige Ende 1c des Hohlprofils 1 an. Damit sind die durchgehenden Längsschlitze 3a, 3b einseitig an einem Ende 1c des Hohlprofils 1 offen. Dies erleichtert das Biegen, zumal auch ein Zugumformungsbiegen mit Biegewerkzeugen handhabungsfreundlich durchgeführt werden kann.

Insbesondere dann, wenn beim Biegen das Hohlprofil 1 an einem innenliegenden Dorn anliegt. Auch kann dies ein Biegen erleichtern, wenn Hohlprofil 1 zwischen zwei außenliegenden Matrizen eingespannt wird, was nicht näher dargestellt worden ist.

Einer unterschiedlichen Längung der beiden Halbschalen 1a, 1b kann für ein planes stirnseitiges Ende 1c nach dem Biegen entgegengewirkt werden. Dies, indem vor dem Biegen die untere Halbschale 1b in deren Länge gegenüber der oberen Halbschale 1a abgelängt wird - dies entsprechend dem Biegeradius und den dabei eintretenden Längungen der Halbschalen 1a, 1b.

Wie zudem der Fig. 3 zu entnehmen, liegen die Schlitzlängskanten 6a, 6b der jeweiligen Längsschlitze 3a, 3b parallel gegenüber und sind zur Radialrichtung geneigt, nämlich v-förmig zueinander geneigt. Dies erleichtert das stoffschlüssige Verbinden und erhöht damit die Reproduzierbarkeit des Verfahrens weiter.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably", und für "gegebenenfalls", ins Englische übersetzt als "if necessary".

## Patentansprüche

1. Verfahren zur Herstellung eines, insbesondere geschlossenen, Hohlprofils (1) mit zumindest einem gebogenen Längsabschnitt (2c), bei dem
ein Hohlprofil (1), insbesondere aus Metall, bereitgestellt wird, das einen Längsabschnitt (2b) mit einer geschlossenen Profilform sowie einen eine offene Profilform aufweisenden Längsabschnitt (2a) mit zumindest einem durchgehend verlaufenden Längsschlitz (3a, 3b) aufweist,
das Hohlprofil (1) im Längsabschnitt (2a) mit der offenen Profilform gebogen wird, und
nach dem Biegen der zumindest eine Längsschlitz (3a, 3b) im gebogenen Längsabschnitt (2c) des Hohlprofils (1) zumindest abschnittsweise stoffschlüssig gefügt wird, insbesondere mit einer Längsschweißnaht (4a, 4b) verschweißt wird.

2. Verfahren nach Anspruch 1, **dadurch gekennzeichnet, dass** das bereitgestellte Hohlprofil (1) ausgehend von einem geschlossenen Hohlprofil (1) unter Einbringung des zumindest einen Längsschlitzes (3a, 3b) hergestellt wird.

3. Verfahren nach Anspruch 1 oder 2, **dadurch gekennzeichnet, dass** das bereitgestellte Hohlprofil (1) wenigstens zwei Längsschlitze (3a, 3b) des zumindest einen Längsschlitz (3a, 3b) aufweist.

4. Verfahren nach Anspruch 3, **dadurch gekennzeichnet, dass** sich zumindest zwei der Längsschlitze (3a, 3b) im Querschnitt des Hohlprofils (1) gesehen diametral gegenüberliegen.

5. Verfahren nach einem der Ansprüche 1 bis 4, **dadurch gekennzeichnet, dass** es sich bei dem zumindest einen Längsschlitz (3a, 3b) um einen zumindest abschnittsweise offenen Längsschlitz (3a, 3b) handelt, der sich durch einen Spalt (5) zwischen seinen sich jeweils gegenüberliegenden Schlitzlängskanten (6a, 6b) ergibt.

6. Verfahren nach einem der Ansprüche 1 bis 5, **dadurch gekennzeichnet, dass** der zumindest eine Längsschlitz (3a, 3b) zumindest einen Distanzhalter (7) aufweist, der einer seiner Schlitzlängskanten (6a, 6b) vorspringt und beim Biegen als Anschlag wirkend einen Abstand zwischen seinen sich gegenüberliegenden Schlitzlängskanten (6a, 6b) festlegt.

7. Verfahren nach einem der Ansprüche 1 bis 6, **dadurch gekennzeichnet, dass** der zumindest eine Längsschlitz (3a, 3b) einseitig an einem Ende des Hohlprofils (1) offen ist und/oder dass der Längsabschnitt (2b) mit der geschlossenen Profilform an den anderen Längsabschnitt (2a) mit der offenen Profilform direkt anschließt.

8. Verfahren nach einem der Ansprüche 1 bis 7, **dadurch gekennzeichnet, dass** beim Biegen, insbesondere Zugumformungsbiegen, das Hohlprofil (1) an zumindest einer, insbesondere außenliegenden, Matrize und/oder an einem, insbesondere innenliegenden, Dorn anliegt.

9. Verfahren nach einem der Ansprüche 1 bis 8, **dadurch gekennzeichnet, dass** vor dem stoffschlüssigen Fügen des zumindest einen Längsschlitzes (3a, 3b), insbesondere vor dem Biegen des Hohlprofils (1), zumindest ein Profillängsabschnitt (1a, 1b) der durch diesen Längsschlitz (3a, 3b) getrennten Profillängsabschnitte (1a, 1b) des Hohlprofils (1) in dessen Länge gegenüber zumindest einem anderen Profillängsabschnitt (1a, 1b) abgelängt wird.

10. Verfahren nach einem der Ansprüche 1 bis 9, **dadurch gekennzeichnet, dass** sich die Schlitzlängskanten (6a, 6b) der jeweiligen Längsschlitze (3a, 3b) parallel gegenüberliegen oder v-förmig zueinander geneigt gegenüberliegen.

11. Verfahren Anspruch 10, **dadurch gekennzeichnet, dass** die sich im Querschnitt parallel gegenüberliegenden Schlitzlängskanten (6a, 6b) zur Radialrichtung geneigten verlaufend sind.

12. Verfahren nach einem der Ansprüche 1 bis 11, **dadurch gekennzeichnet, dass** der zumindest eine Längsschlitz (3a, 3b) durchgehend stoffschlüssig gefügt wird, insbesondere mit einer Längsschweißnaht (4a, 4b) durchgehend verschweißt wird.

13. Verfahren nach einem der Ansprüche 1 bis 12, **dadurch gekennzeichnet, dass** der zumindest eine Längsschlitz (3a, 3b) in Längsrichtung (L) zumindest abschnittsweise einen geraden und/oder gekrümmten, insbesondere sägezahnförmigen und/oder wellenförmigen, Verlauf aufweist.

14. Hohlprofil, insbesondere geschlossenes Hohlprofil (1), hergestellt mit einem Verfahren nach einem der Ansprüche 1 bis 13, **dadurch gekennzeichnet, dass** das Hohlprofil (1) unter Vermeidung einer umfänglich geschlossenen Fügeverbindung, insbesondere Querschweißnaht, im gebogenen Längsabschnitt (2c) zumindest einen stoffschlüssig gefügten, insbesondere verschweißten, Längsschlitz (3a, 3b) aufweist.

15. Bauteil mit oder aus einem Hohlprofil (1) nach Anspruch 14.
